(19) Europäisches Patentamt
European Patent Office
Office européen des brevets

(11) **EP 3 318 511 A1**

(12) **EUROPÄISCHE PATENTANMELDUNG**

(43) Veröffentlichungstag:
**09.05.2018 Patentblatt 2018/19**

(51) Int Cl.:
***B65G 1/137*** *(2006.01)*      ***B65B 5/04*** *(2006.01)*
***G06Q 10/08*** *(2012.01)*

(21) Anmeldenummer: **16197455.5**

(22) Anmeldetag: **07.11.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **WITRON Logistik + Informatik GmbH 92711 Parkstein (DE)**

(72) Erfinder: **Winkler, Walter 92711 Parkstein (DE)**

(74) Vertreter: **Betten & Resch Patent- und Rechtsanwälte PartGmbB Maximiliansplatz 14 80333 München (DE)**

(54) **VERFAHREN UND VORRICHTUNG ZUR LAGERUNG VON ARTIKELN, INSBESONDERE KLEINTEILEN, IN VORDEFINIERTEN VERPACKUNGSMODULEN**

(57)      Ein Verfahren zum Lagern von Artikeln, insbesondere von Kleiriteilen, weist die Verfahrensschritte der Auswahl, für jeden zu lagernden Artikel, eines Verpackungsmoduls (50) eines bestimmten Verpackungsmodul-Typs aus einer Anzahl verschiedener vordefinierter (standardisierter) Verpackungsmodul-Typen mit jeweils unterschiedlichen Grundftachenmaßen einer bestimmten Rasterung, der artikelspezifischen Anpassung der Packungshöhe des jeweils ausgewählten Verpackungsmoduls (50) an die Größe des Artikels, und der Lagerung der in den jeweiligen Verpackungsmodulen verpackten Artikel in Lagermagazinen (60) auf, wobei verschiedene Lagermagazin-Typen entsprechend den verschiedenen Verpackungsmodul-Typen vorgesehen sind. Die Erfindung ermöglicht eine automatisierte Handhabung der gelagerten Artikel und gleichzeitig eine hohe Lagerdichte.

Fig. 3

## Beschreibung

### Gebiet der Erfindung

Die Erfindung betrifft ein Verfahren zur Lagerung von Artikeln, insbesondere von Kleinteilen, in einem Lager.

### Hintergrund der Erfindung

In automatisierten Logistiksystemen ist es erforderlich, dass einerseits die verpackten Waren sicher und mit hoher Verfügbarkeit gefördert und gehandhabt werden können und andererseits eine möglichst hohe Lagerdichte erzielt wird.

Ein automatisiertes System kann jedoch nicht allen Arten von Warenverpackungen handhaben bzw. nur mit sehr hohem Aufwand einer Vielzahl von unterschiedlichen Verpackungen Rechnung tragen. Deshalb wird in automatisierten Systemen häufig auf eine kleine Anzahl von standardisierte Kartons zurückgegriffen. Dies bringt jedoch den Nachteil einer reduzierten Lagerdichte mit sich, da die Kartonabmessungen in den meisten Fällen nicht zu den Artikelabmessungen "passen" und auf den jeweils nächstgrößeren Standardkarton zurückgegriffen werden muss, der dann jedoch vergleichsweise viel "Luft" enthält.

Aufgabe der Erfindung ist es daher, ein Verfahren und eine Vorrichtung zur Lagerung von Artikeln, insbesondere von Kleinteilen vorzuschlagen, die eine sichere und hochverfügbare automatisierte Handhabung der Artikel bei gleichzeitig hoher Lagerdichte ermöglichen.

### Zusammenfassung der Erfindung

Erfindungsgemäß wird diese Aufgabe gelöst durch ein Verfahren zum Lagern von Artikeln, insbesondere von Kleinteilen, aufweisend die Verfahrensschritte der Auswahl, für jeden zu lagernden Artikel, eines Verpackungsmoduls eines bestimmten Verpackungsmodul-Typs aus einer Anzahl verschiedener vordefinierter (standardisierter) Verpackungsmodul-Typen mit jeweils unterschiedlichen Grundflächenmaßen einer bestimmten Rasterung, der artikelspezifischen Anpassung der Packungshöhe des jeweils ausgewählten Verpackungsmoduls an die Größe des Artikels, und der Lagerung der in den jeweiligen Verpackungsmodulen verpackten Artikel in einem Lager.

Die Erfindung schlägt weiterhin eine Lagervorrichtung zur Lagerung von Artikeln, insbesondere von Kleinteilen vor, wobei die Artikel in Verpackungsmodulen verpackt gelagert werden und verschiedene vordefinierte Verpackungsmodul-Typen mit unterschiedlichen Grundflächenmaßen einer bestimmten Rasterung vorgesehen sind, wobei die Höhe der Verpackungsmodule unabhängig vom Verpackungsmodul-Typ entsprechend den Maßen des darin gelagerten Artikels wählbar ist, und aufweisend eine Vielzahl von Lagermagazinen zur Aufnahme der Verpackungsmodule, wobei verschiedene Lagermagazin-Typen entsprechend den verschiedenen Verpackungsmodul-Typen vorgesehen sind.

Der vorliegenden Erfindung liegt die Erkenntnis zu Grunde, dass es für einen sicheren Transport und ein sicheres Handling in einem automatisierten Logistiksystem vorteilhaft ist, die Grundfläche der verwendeten Lagerverpackungen zu standardisieren, währen die Packungshöhe individuell an das zu lagernde Produkt angepasst werden kann, ohne die automatisierte Handhabung zu beeinträchtigen. Durch die individuelle Anpassung der Packungshöhe an die Abmessungen des zu lagernden Artikels kann die Lagerdichte erheblich vergrößert werden.

Vorzugsweise werden die Verpackungsmodule in Lagermagazinen gelagert, wobei verschiedene Lagermagazin-Typen entsprechend den verschiedenen Verpackungsmodul-Typen vorgesehen sind. Durch die dann ebenfalls standardisierten Lagermagazine kann die Lagerdichte weiter erhöht werden.

Die Lagermagazine sind dabei vorzugsweise mit der im Lager vorgesehenen Fördertechnik wie Regalfahrzeugen und Endlosförderern verfahrbar und können so flexibel gelagert und den Kommissionierstationen zugeführt werden. Die Abmessungen der Lagermagazine können dabei an die Dimensionen einer bereits im Lager vorhandenen Fördertechnik angepasst werden.

Vorzugsweise sind die Verpackungsmodule als Kartonverpackungen ausgebildet, wobei die jeweilige Höhe der Verpackungsmodule durch entsprechende Fixierung eines aufgeschobenen Kartondeckels angepasst wird. Insbesondere kann dabei zur Optimierung der Ladungsdichte die Innenhöhe des Verpackungsmoduls gleich der maximalen Höhe des darin verpackten Artikels gewählt werden.

Vorzugsweise werden die Verpackungsmodule im Lager ausschließlich liegend bewegt, so dass eine Beschädigung der Verpackungen vermieden werden kann.

Vorzugsweise befindet sich in jedem Verpackungsmodul jeweils nur ein einziger Artikel bzw. eine Verkaufseinheit des Artikels, wodurch die Lagerverwaltung vereinfacht wird.

Gemäß einem bevorzugten Ausführungsbeispiel sind die Grundflächenmaße der Lagermagazine aller Lagermagazin-Typen gleich groß, wodurch die Flexibilität des Lagers zur Lagerung unterschiedlicher Artikel erhöht wird. Vorzugsweise weist jeder Lagermagazin-Typ einen oder mehrere Lagerschächte mit einer Grundfläche zur passgenauen Aufnahme eines Verpackungsmoduls des entsprechenden Verpackungsmodul-Typs auf, wobei die Grundflächenmaße der verschiedenen standardisierten Verpackungsmodul-Typen so gewählt sind, dass für jeden Lagermagazin-Typ jeweils eine ganze Zahl von Lagerschächten passgenau auf die Grundfläche des Lagermagazins passt. Dadurch wird die Lagerdichte des Lagers weiter optimiert.

Ein zu lagernder Artikel kann bereits beim Hersteller oder Lieferanten oder alternativ bei der Anlieferung zum Lager in ein Verpackungsmodul einer der standardisierten, vordefinierten Verpackungsmodul-Typen verpackt werden.

Vorzugsweise werden die Verpackungsmodule alleine oder in Gruppen zusammengefügt auch als Versandverpackung verwendet, wodurch eine Umverpackung und die damit verbundenen Kosten vermieden werden. Vorzugsweise kann eine einzige standardisierte Verpackung mit individuell angepasster Packungshöhe von der Herstellung über die Lagerung und Distribution bis zur Auslieferung an den Endkunden verwendet werden.

**Figurenbeschreibung**

Die Erfindung wird nachstehend anhand von Ausführungsbeispielen unter Bezugnahme auf die Zeichnungen im Einzelnen beschrieben. Dabei zeigt:

Fig. 1a) eine schematische Darstellung des Aufbaus eines Ausführungsbeispiels einer erfindungsgemäßen Lagervorrichtung;

Fig. 1b) eine schematische Darstellung des Kommissionierbereichs eines Ausführungsbeispiels einer erfindungsgemäßen Lagervorrichtung;

Fig. 2 ein Flussdiagramm eines Ausführungsbeispiels eines erfindungsgemäßen Verfahrens zur Lagerung von Artikeln;

Fig. 3 ein Flussdiagramm weiterer Verfahrensschritte des in Fig. 2 gezeigten Ausführungsbeispiels eines erfindungsgemäßen Verfahrens zur Lagerung von Artikeln;

Fig. 4 eine schematische Darstellung von Ausführungsbeispielen standardisierter Verpackungsmodule eines ersten und eines zweiten erfindungsgemäßen Verpackungsmodul-Typs;

Fig. 5 eine schematische Darstellung von Ausführungsbeispielen standardisierter Verpackungsmodule eines dritten und eines vierten erfindungsgemäßen Verpackungsmodul-Typs;

Fig. 6 eine schematische Darstellung von Ausführungsbeispielen standardisierter Verpackungsmodule eines fünften und eines sechsten erfindungsgemäßen Verpackungsmodul-Typs;

Fig. 7 eine schematische Darstellung eines Ausführungsbeispiels eines Lagermagazins eines ersten erfindungsgemäßen Lagermagazin-Typs;

Fig. 8 eine schematische Darstellung eines Ausführungsbeispiels eines Lagermagazins eines zweiten erfindungsgemäßen Lagermagazin-Typs;

Fig. 9 eine schematische Darstellung eines Ausführungsbeispiels eines Lagermagazins eines dritten erfindungsgemäßen Lagermagazin-Typs;

Fig. 10 eine schematische Darstellung eines Ausführungsbeispiels eines Lagermagazins eines vierten erfindungsgemäßen Lagermagazin-Typs;

Fig. 11 eine schematische Darstellung eines Ausführungsbeispiels eines Lagermagazins eines fünften erfindungsgemäßen Lagermagazin-Typs;

Fig. 12 eine schematische Darstellung eines Ausführungsbeispiels eines Lagermagazins eines sechsten erfindungsgemäßen Lagermagazin-Typs;

Fig. 13 eine schematische Darstellung einer Einrichtung zur Entnahme eines Verpackungsmoduls aus einem erfindungsgemäßen Lagermagazin;

Fig. 14      eine schematische Darstellung von erfindungsgemäßen Verpackungsmodulen, die zu Versandverpackungen zusammengefügt sind; und

Fig. 16      eine schematische Darstellung zweier beispielhafter, auf Versandladungsträgern gestapelter Ladestapel erfindungsgemäßer Versandverpackungen.

**Detaillierte Beschreibung der Erfindung**

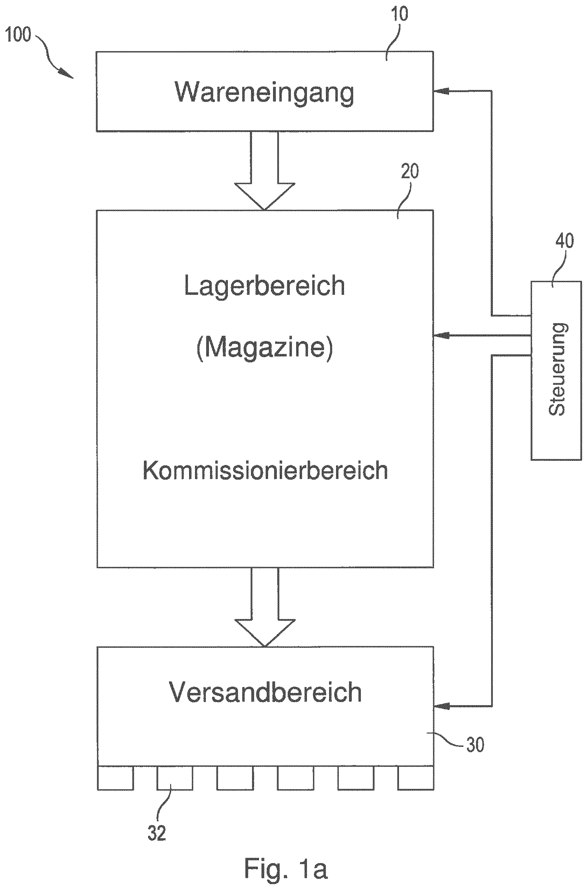

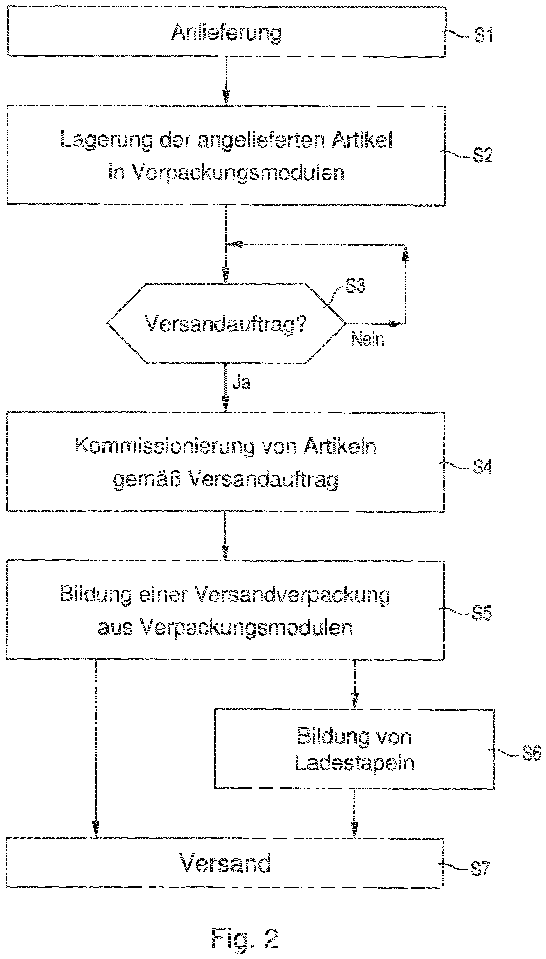

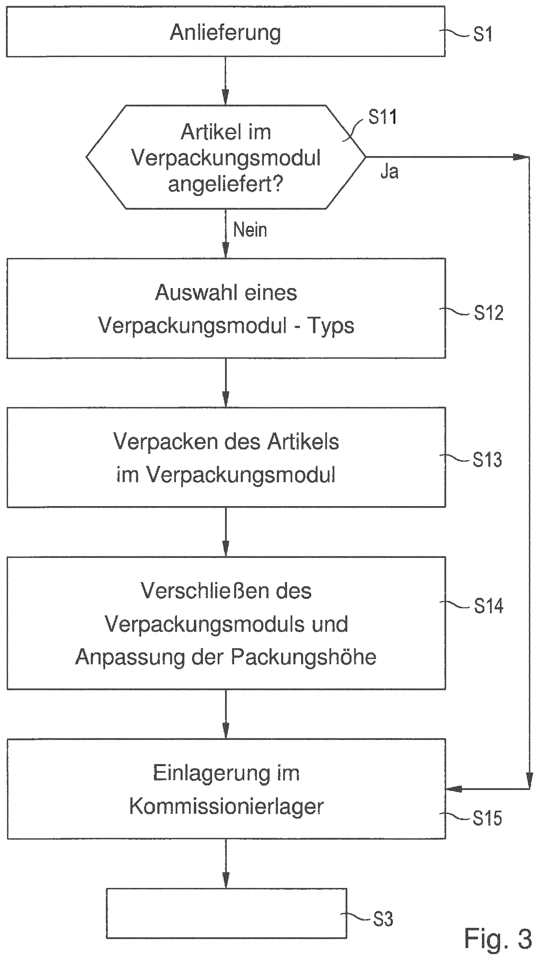

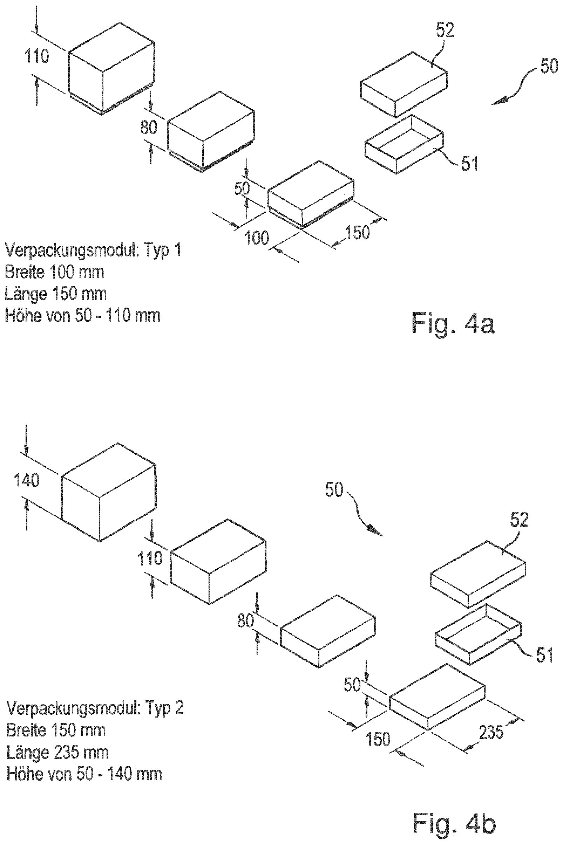

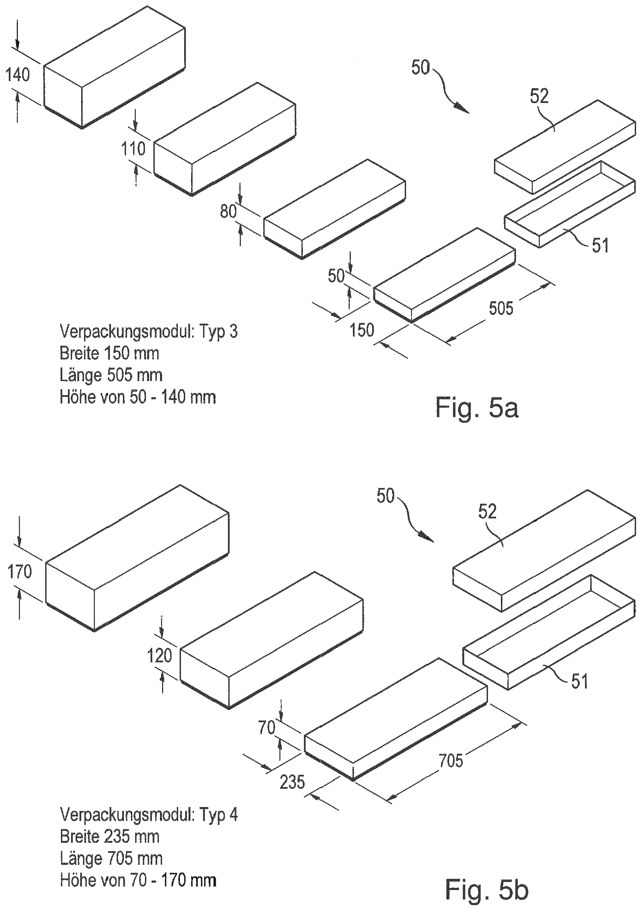

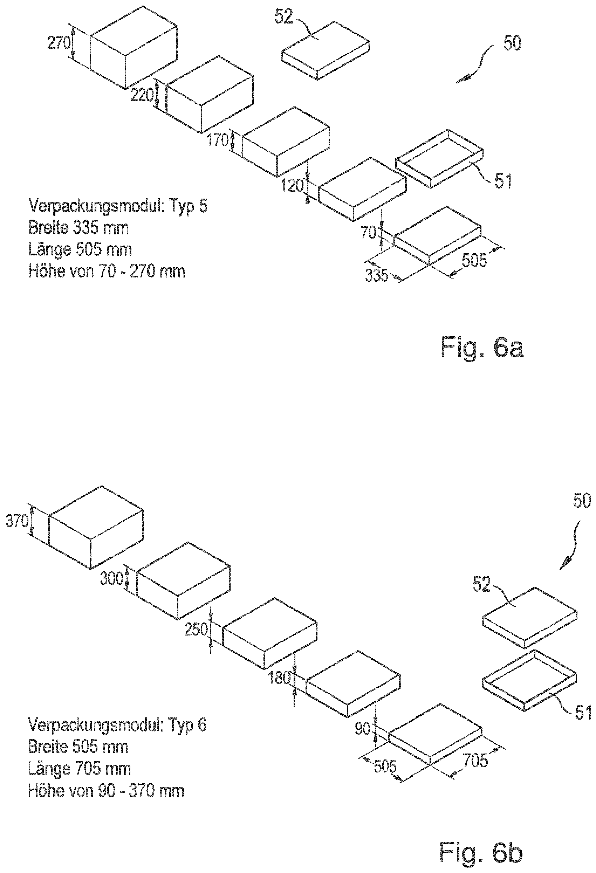

Figur 1a) zeigt eine schematische Darstellung eines Ausführungsbeispiels einer erfindungsgemäßen Lagervorrichtung 100 zur Lagerung von Artikeln, insbesondere von Kleinteilen. Die Artikel werden an einem Wareneingang 10 beispielsweise per Lkw oder einem anderen geeigneten Verkehrsmittel angeliefert. Dabei können sich die die Artikel bereits in erfindungsgemäßen, standardisierten Verpackungsmodulen befinden. Ist dies nicht der Fall, werden die Artikel in derartige, erfindungsgemäße Verpackungsmodule umgepackt, wie im Detail anhand der Flussdiagramme der Fig. 2 und 3 erläutert werden wird. Die Verpackungsmodule selbst werden anhand der Figuren 4 bis 7 beschrieben.

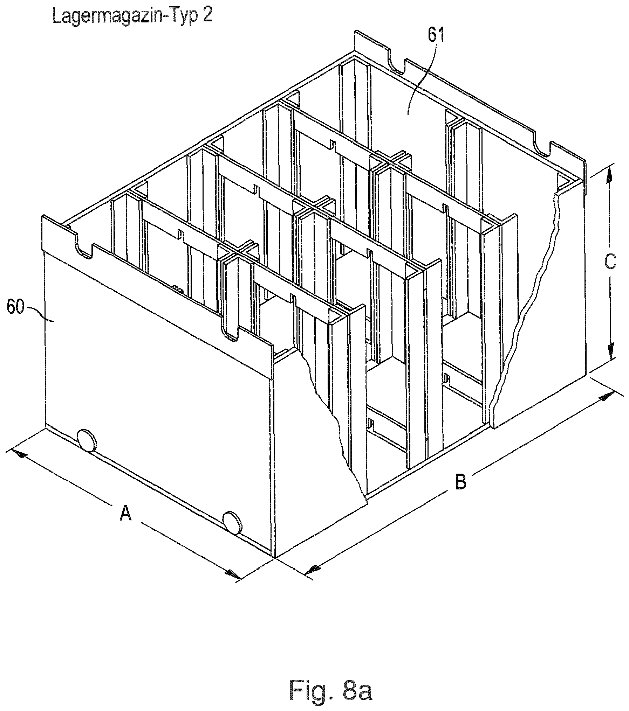

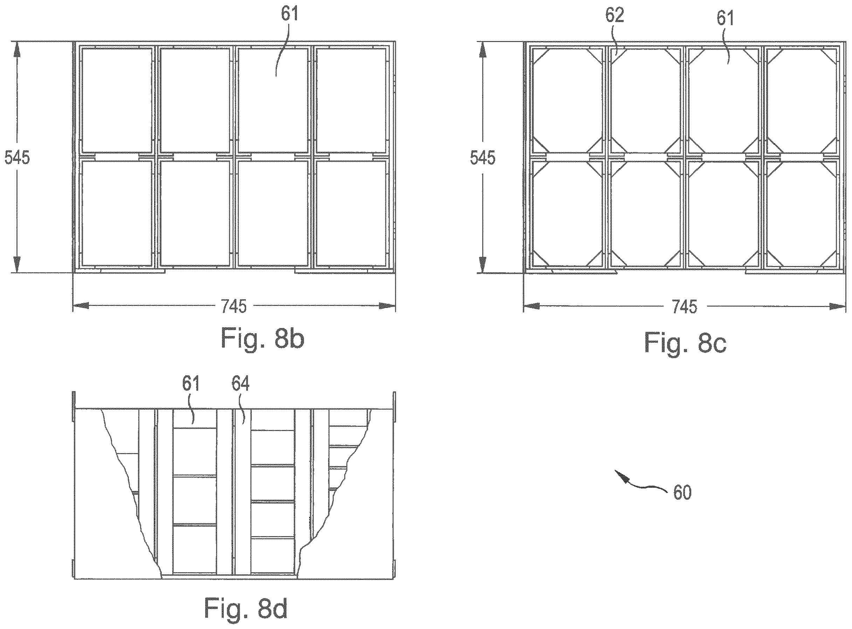

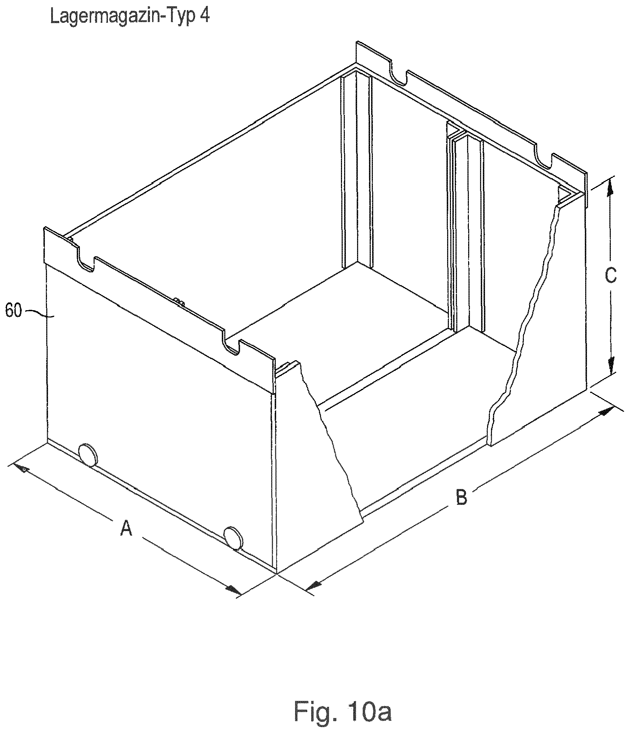

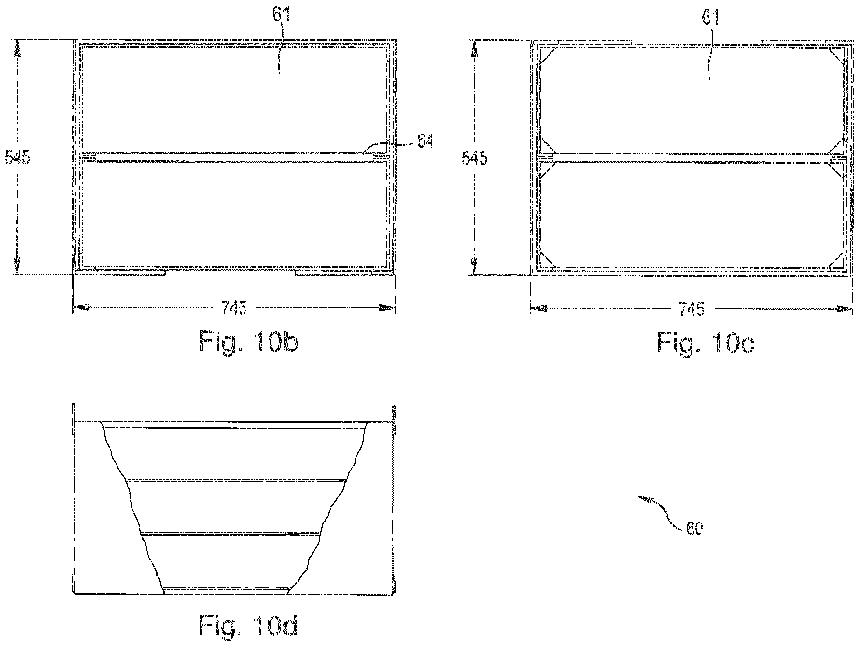

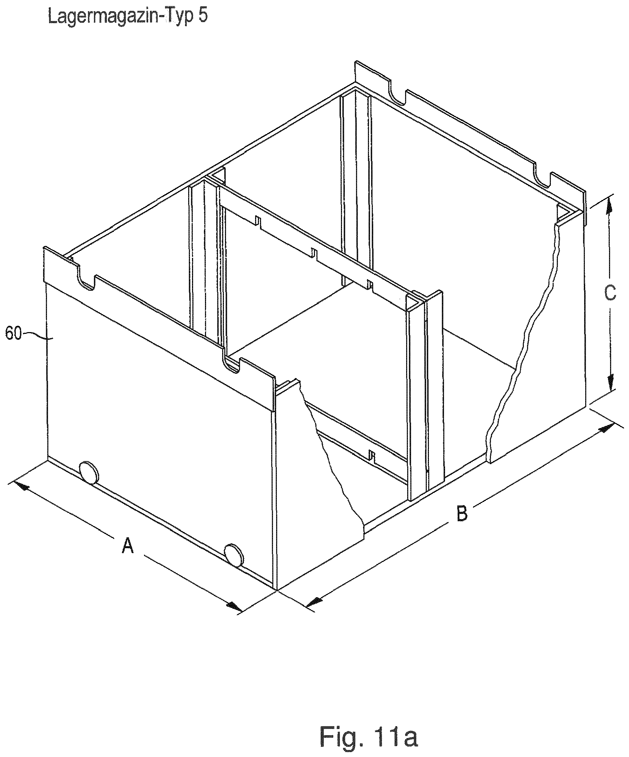

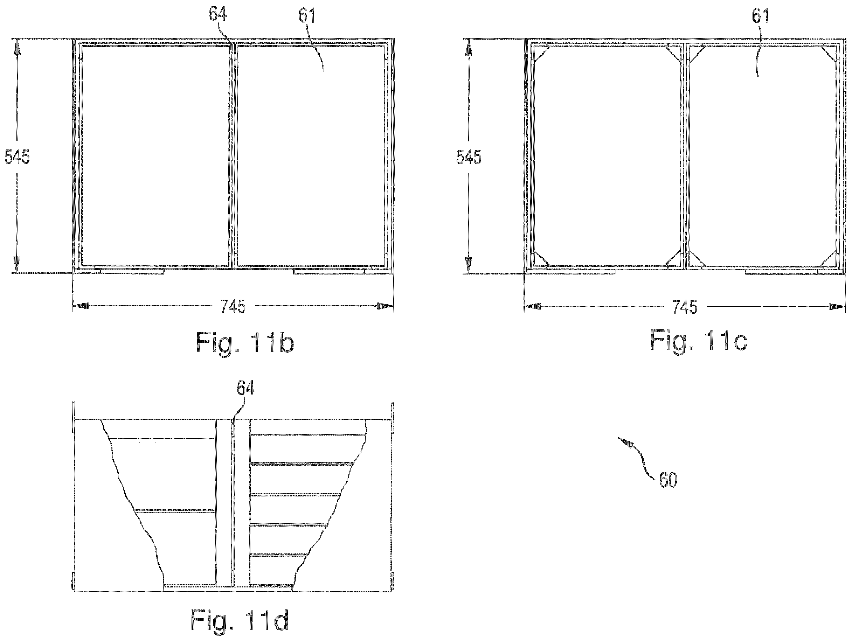

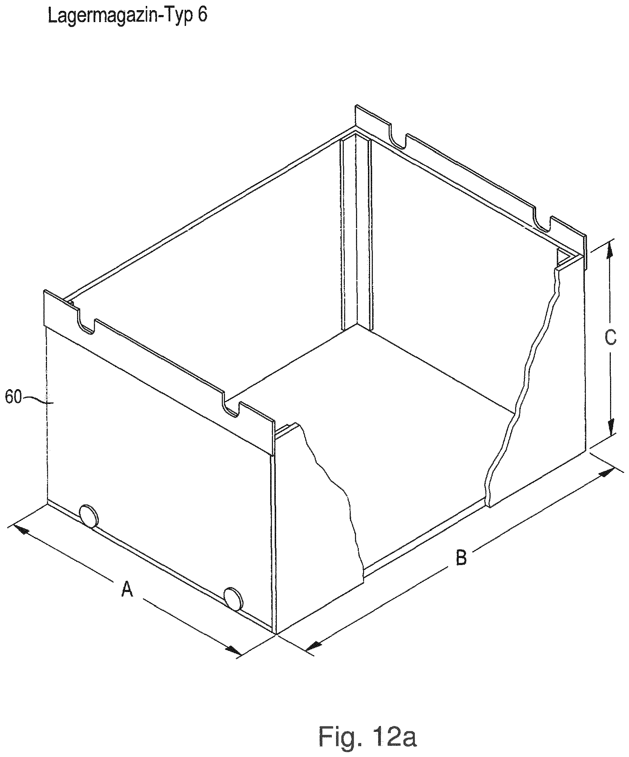

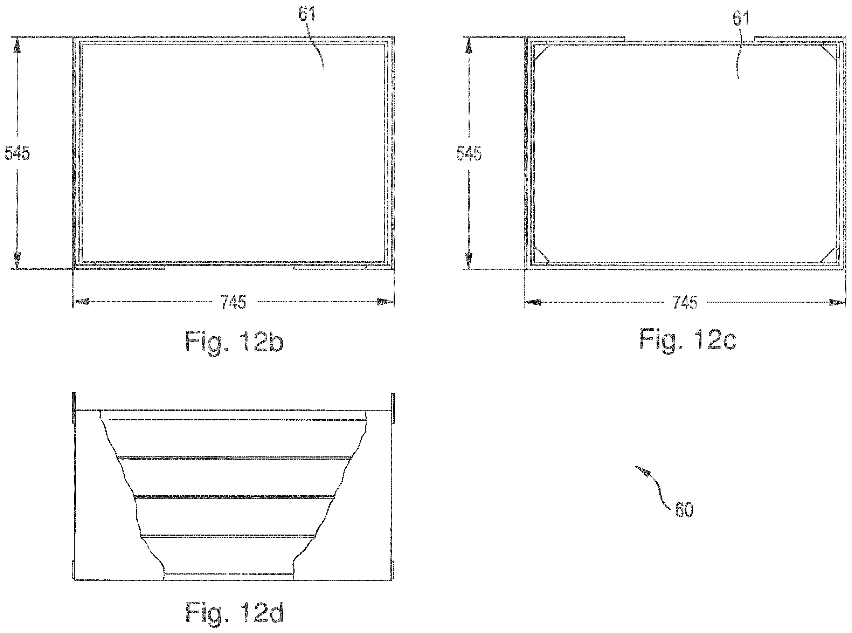

Eine vorzugsweise automatisierte Fördertechnik fördert die in den Verpackungsmodulen befindlichen Artikel in den Lagerbereich 20, in dem die Artikel in an die Maße der Verpackungsmodule 50 angepassten Lagermagazinen 60 (siehe Beschreibung mit Bezugnahme Bezug auf Fig. 8 bis 12) gelagert werden. Dadurch wird eine besonders hohe Lagerdichte erreicht.

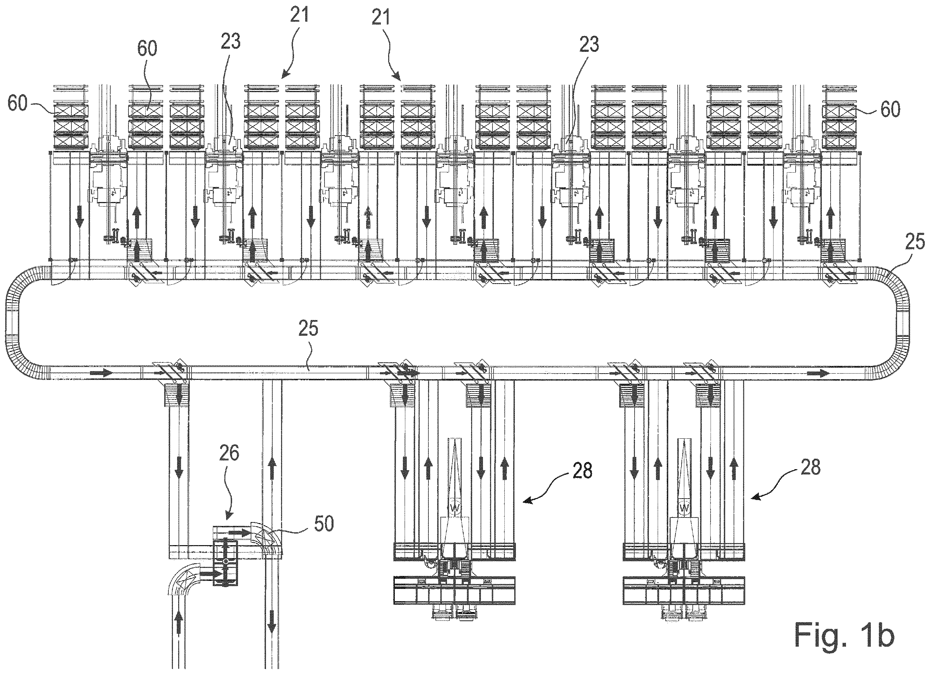

Fig. 1b) zeigt schematisch in Aufsicht einen Teil des Lagerbereichs sowie den Kommissionierbereich eines Ausführungsbeispiels einer erfindungsgemäßen Lagervorrichtung. Die Artikel werden in Lagermagazinen 60 gelagert, die wiederum in Lagerregalen 21 untergebracht sind und durch Regalfahrzeuge 23 ein- und auslagerbar sind.

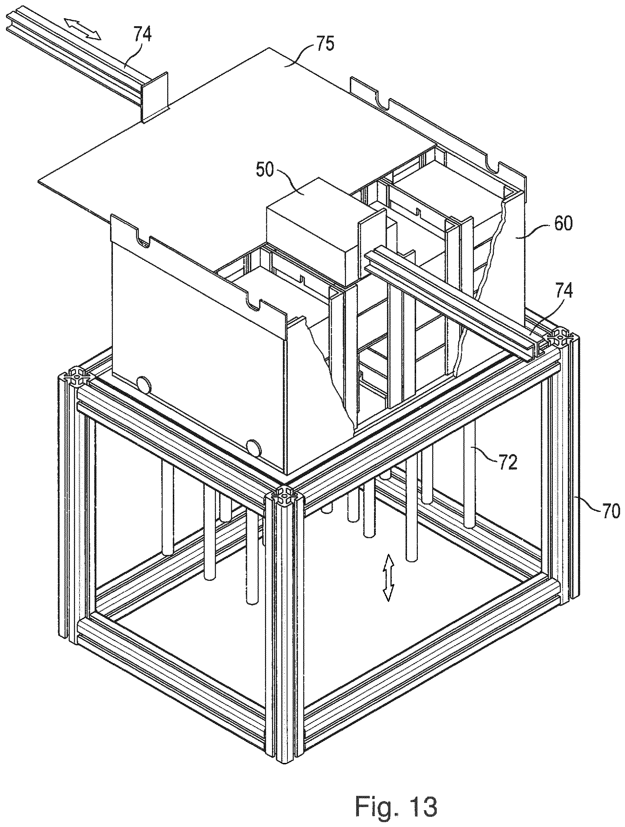

Bei Erfassung eines Versandauftrages werden die entsprechende Artikel enthaltende Lagermagazine 60 mittels eines der Regalfahrzeuge 23 aus dem jeweiligen Regal 21 entnommen, einem Kreisförderer 25 zugeführt und von dort auf eine der Kommissionierstationen 26, 28 verteilt. Bei den Kommissionierstationen 28 handelt es sich um herkömmliche Kommissionierstationen, bei denen die Artikel manuell durch einen Kommissionierer kommissioniert werden, während die Kommissionierstation 26 einen automatisierte Station ist, bei der die gewünschte Anzahl von Verpackungsmodulen mittels einer Hubeinrichtung aus dem Kommissioniermagazin entnommen wird, wie im Folgenden unter Bezugnahme auf Fig. 13 erläutert werden wird. Die vorliegende Erfindung umfasst sowohl die automatisierte als auch die manuelle Kommissionierung. Die erfindungsgemäßen Verpackungsmodule 50 sind jedoch zur Verwendung mit automatisierten Kommissioniersystemen optimiert. Durch diese Flexibilität kann die Erfindung auch durch die Nachrüstung bestehender Logistikanlagen implementiert werden.

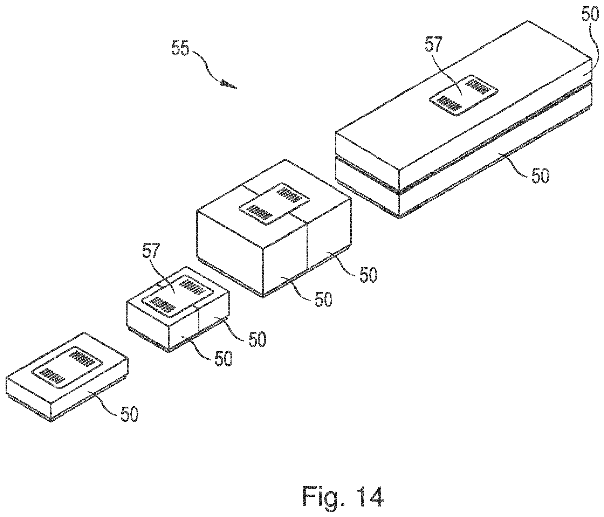

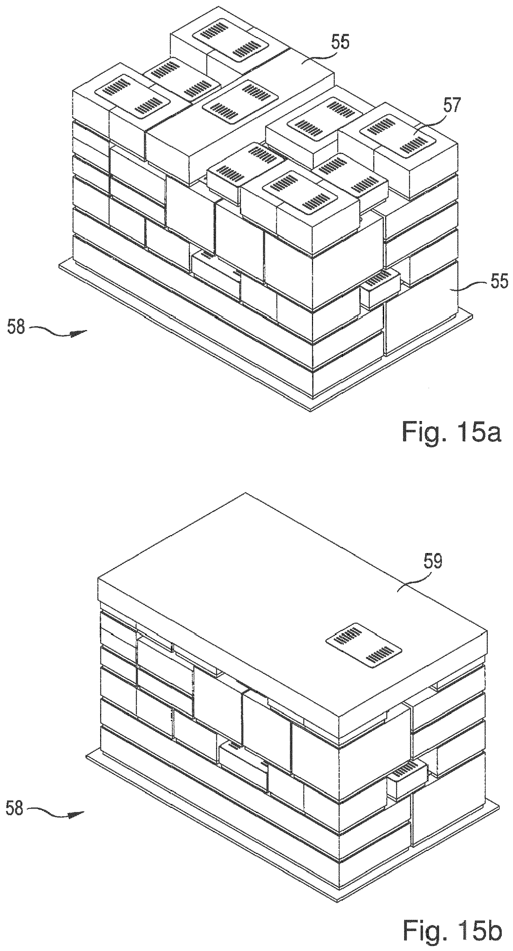

Fig. 13 zeigt schematisch ein Ausführungsbeispiel einer an einer automatischen Kommissionierstation 26 vorgesehenen Entnahmevorrichtung zur Entnahme von Verpackungsmodulen 50 aus den Ladeschächten eines Lagermagazins 60, welches auf einem Gestell 70 aufliegt. Ein Stempel oder Hubstift 72 hebt das Verpackungsmodul 50 aus dem Lagerschacht 61, wo es auf einer Förderebene 75 von einem Pusher 74 ergriffen und ohne manuelle Arbeit zur weiteren Verarbeitung weitertransportiert wird. Dabei erfolgt die Förderung eines Verpackungsmoduls 50 in der gesamten Lagereinrichtung 100 vorzugsweise liegend, d.h. das Verpackungsmodul 50 ist immer von unten unterstützt. Dadurch werden Beschädigungen des Verpackungsmoduls oder des darin gelagerten Artikels vermieden. Die so kommissionierten Verpackungsmodule 50 werden anschliessend mit einer geeigneten, vorzugsweise ebenfalls automatisierten Fördertechnik zu einem Versandbereich 30 gefördert, wo die Verpackungsmodule 50 zu Versandverpackungen 55 zusammengestellt werden (siehe spätere Beschreibung mit Bezugnahme auf Fig. 14 und 15) und an LKW-Rampen 32 ausgeliefert werden.

Die Fig. 2 und 3 sind Flussdiagramme zur Erläuterung eines Ausführungsbeispiels eines erfindungsgemäßen Verfahrens zur Lagerung von Artikeln, insbesondere Kleinteilen.

In einem ersten Verfahrensschritt S1 werden die zu lagernden Artikel (Kleinteile) angeliefert. Wie erwähnt können die Artikel sich dabei bereits in einer erfindungsgemäßen standardisierten Verpackungsmodulen 50 befinden oder nicht (Verfahrensschritt S11 in Fig. 3). Ist der Artikel bereits in einer standardisierten Verpackung, geht das Verfahren weiter zu Schritt S15, in dem das Verpackungsmodul 50 in den Lagerschacht 61 eines Lagermagazins 60 eines dem Verpackungsmodul-Typ zugeordneten Lagermagazin-Typs eingelagert wird.

Befindet sich der angelieferte Artikel nicht in einem standardisierten Lagermodul 50, so werden die Abmessungen des Artikels mittels einer (nicht dargestellten, an sich bekannten) Messvorrichtung erfasst und es wird in Verfahrensschritt S12 ein passender Verpackungsmodul-Typ aus einer Anzahl vordefinierter Verpackungsmodul-Typen ausgewählt, die sich durch ihre Grundflächenabmessungen unterscheiden. Im darauffolgenden Verfahrensschritt S13 wird der Artikel in das Bodenteil 51 (siehe Fig. 4 bis 8) eines Verpackungsmoduls 50 des ausgewählten Verpackungsmodul-Typs gesetzt und anschließend in Schritt S14 das Deckelteil 52 des Verpackungsmoduls 50 aufgesetzt. Das Deckelteil 52 wird in der Position mittels Verklebens oder dgl. auf dem Bodenteil 51 fixiert, in der die Innenhöhe der Verpackung gerade gleich der maximalen Höhe des verpackten Artikels ist, d.h., das Deckelteil 52 sitzt auf dem Artikel auf. Dadurch wird eine minimaler Platzbedarf und somit eine maximale Lagerdichte erreicht. In Verfahrensschritt S15 wird das Verpackungsmodul dann in den Lagerschacht 61 eines Lagermagazins 60 eines dem Verpackungsmodul-Typ zugeordneten Lagermagazin-Typs eingelagert, wo dieses bis zur Erfassung eines entsprechenden Versandauftrages lagert (Verfahrensschritte S2 und S3 in Fig. 2). Bei Erfassung eines Versandauftrages werden in Schritt S4 die dem Auftrag zugehörigen Artikel automatisiert aus den Lagermagazinen 60 entnommen (siehe Fig. 13) und zu dem Gesamtauftrag zusammengestellt (kommissioniert). Dabei werden die standardisierten Lagermodule 50 auch als Versandverpackung benutzt, bzw. werden zweckmäßig mehrere Packmodule des gleichen Typs oder unterschiedlicher Typen zu Versandverpackungen 55 zusammengesetzt, wie in Fig. 14 gezeigt ist. Die Versandverpackungen 55 können in Verfahrensschritt S7 entweder einzeln versandt oder automatisiert zu versandfertigen Einheiten wie etwa Ladestapeln 58 zusammengestellt werden, wie in Fig. 15 gezeigt ist, die anschließend auf Lkw oder dgl. ausgeliefert werden. Zur Vervollständigung einer versandfertigen Einheit 55 können dabei auch leere Verpackungsmodule oder Deckelteile 59 verwendet werden.

Die Ausgestaltung der erfindungsgemäßen standardisierten Verpackungsmodule 50 ist beispielhaft in den Fig. 4 - 6 gezeigt. Ein Verpackungsmodul 50 besteht aus einem Bodenteil 51 mit einem gerasterten, standardisierten Bodenmaß und einem aufschiebbaren Deckelteil 52, dessen Fixierung am Bodenteil 51 die Höhe des Verpackungsmoduls in Abhängigkeit des gelagerten Artikels bestimmt. Die Rasterung der Bodenmaße ist so gewählt, dass einerseits die Schmalseitenlänge a eines größeren Verpackungsmodul-Typs gleich der Längsseitenlänge b eines kleineren Verpackungsmodul-Typs ist. Es gibt somit einen Satz Rastermaße $L_1$, $L_2$, $L_3$, ..., $L_n$, die sowohl für die Schmalseiten als auch für die Längsseiten gewählt werden. Dadurch können standardisierte Verpackungsmodule auch verschiedener Typen (Größen) zu einer bündigen Versandverpackung verbunden werden (siehe Fig. 14 und 15). Außerdem ist die Bildung von ladungsdichteoptimierten Packstapeln 58 erleichtert, wie in Fig. 15 illustriert ist. Darüber hinaus können die so gerasterten Verpackungsmodule 50 optimal in die entsprechend dimensionierten Lagermagazine 60 eingepasst werden, die jeweils unterschiedliche Einsätze 62, aber identische Außenmaße aufweisen. So wird ein flexibles Lager hoher Lagerdichte ermöglicht.

Im vorliegenden Ausführungsbeispiel sind die Rastermaße wie folgt gewählt:

$$L_1 = 100 \text{ mm}, L_2 = 150 \text{ mm}, L_3 = 235 \text{ mm}, L_4 = 335 \text{ mm}, L_5 = 505 \text{ mm}, L_6 = 705 \text{ mm}.$$

Die minimale Länge L1 ist dabei typischerweise durch die Mindestgröße eines Etikettenaufklebers oder dgl. eines Transportdienstleisters bestimmt. Selbstverständlich ist die Erfindung jedoch nicht auf diese speziellen Maße beschränkt.

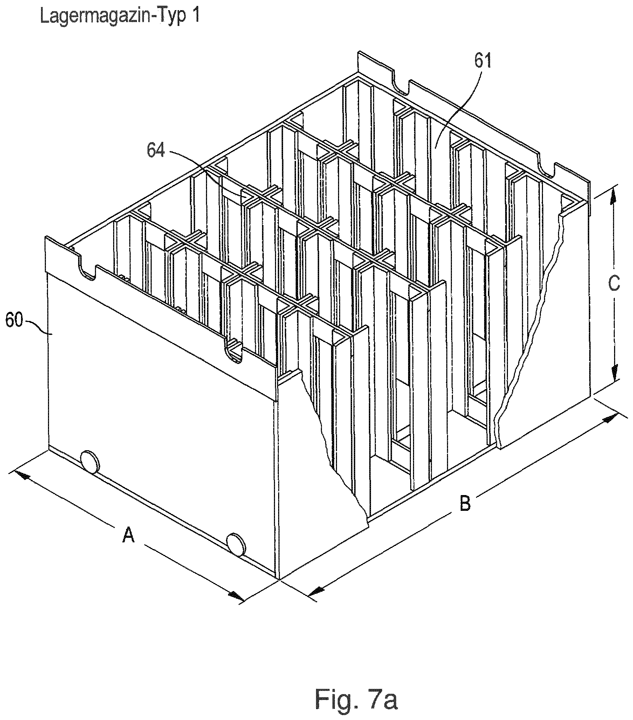

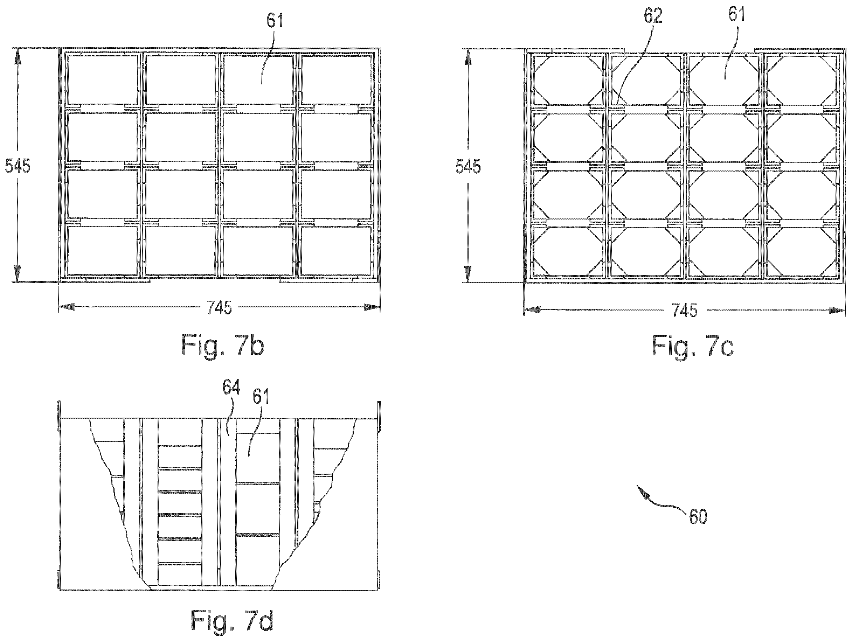

Die Fig. 7 - 12 zeigen schematisch Ausführungsbeispiele von erfindungsgemäßen Lagermagazinen 60 eines ersten bis sechsten Lagermagazin-Typs, die alle die gleichen Außenabmessungen haben. Die Fig. 7a) - 12a) zeigen dabei die eine perspektivische Ansicht der jeweiligen Lagermagazine, die Fig. 7b) - 12b) eine Aufsicht mit eingesetzten Einsätzen 64, die Fig. 7c) - 12c) eine Aufsicht ohne Einsätze 64, und die Fig. 7c) - 12c) eine teilweise aufgeschnittene Seitenansicht. Vorzugsweise bestehen die Lagermagazine aller Lagermagazin-Typen aus dem gleichen Außenkörper, in welche unterschiedliche, an die verschiedenen Verpackungsmodul-Typen angepasste Einsätze 64 einschiebbar sind, die eine entsprechende Anzahl von Lagerschächten 61 zur Aufnahme der Verpackungsmodule 50 aufweisen. Die Einsätze 64 weisen am Boden jedes Lagerschachts 61 mit einer Öffnung versehene seitliche Halterungen 62 zum Halten des darin befindlichen Verpackungsmoduls 50 auf. Die gebildete Öffnung dient zum Herausheben des Lagermoduls mittels eines Hubstifts 72 (Fig. 13).

Durch die austauschbaren Einsätze 64 können die Lagermagazine 60 sehr flexibel an die jeweils zu lagernden Produkte angepasst werden, so dass immer eine optimale Lagerdichte erreicht wird. Durch die identische Außenmasse können mehrere Lagermagazine 60 aufeinander gestapelt werden, was wiederum die Lagerdichte erhöht. Vorzugsweise können die Lagermagazine 60 aller Lagermagazin-Typen in verschiedenen Bauhöhen zur Anpassung an unterschiedliche Artikel- und damit Verpackungshöhen vorgesehen sein.

Das in Fig. 7 gezeigte Lagermagazin 60 des ersten Lagermagazin-Typs ist so dimensioniert, dass es 16 Lagerschächte 61 aufweist, deren Grundmaße an die passgenaue Aufnahme jeweils eines Verpackungsmoduls des Typs 1 mit Grundflächenmassen von 100 mm x 150 mm angepasst ist.

Entsprechend ist das in Fig. 8 gezeigte Lagermagazin 60 des zweiten Lagermagazin-Typs so dimensioniert, dass es 8 Lagerschächte 61 aufweist, deren Grundmaße an die passgenaue Aufnahme jeweils eines Verpackungsmoduls des Typs 2 mit Grundflächenmassen von 150 mm x 235 mm angepasst ist.

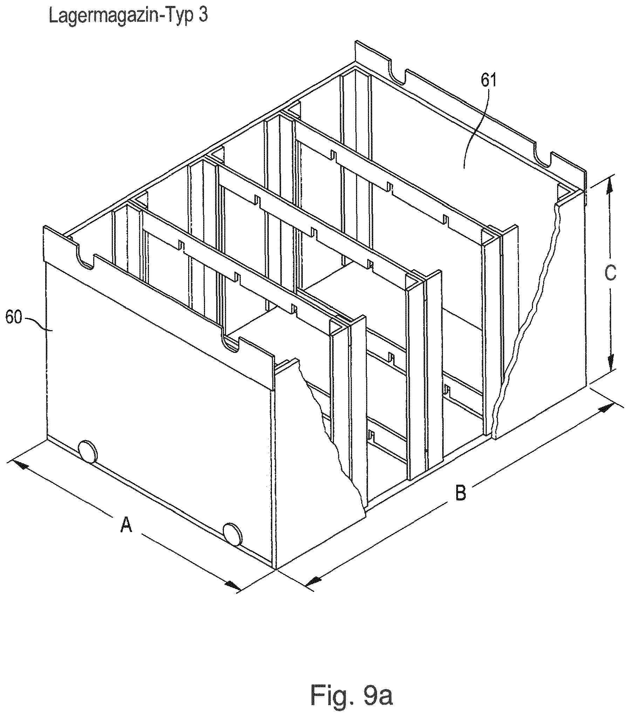

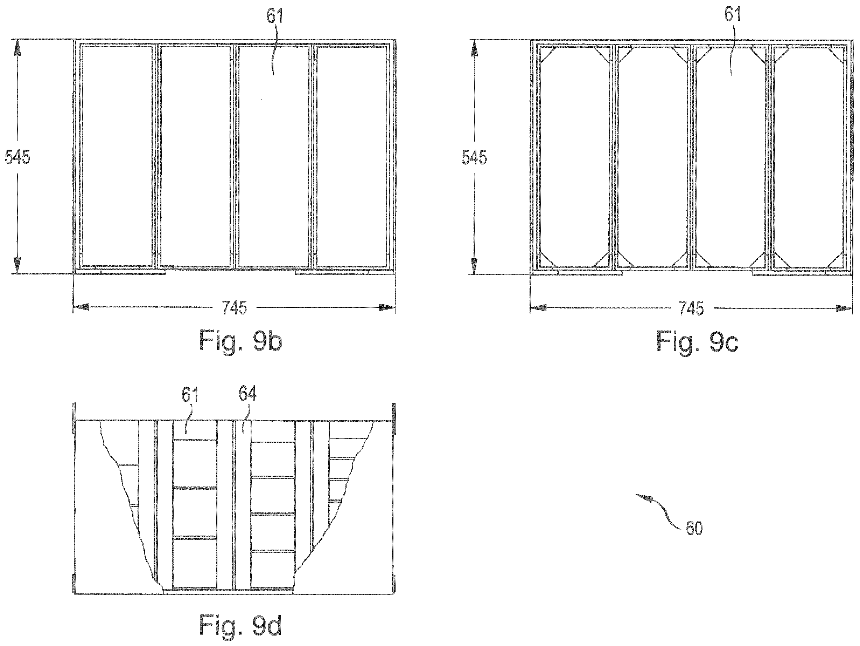

Entsprechend ist das in Fig. 9 (10, 11, 12) gezeigte Lagermagazin des 3. (4., 5., 6.) Lagermagazin-Typs so dimensioniert, dass es 4 (2, 2, 1) Lagerschächte 61 aufweist, deren Grundmaße an die passgenaue Aufnahme jeweils eines Verpackungsmoduls des Typs 3 (4, 5, 6) mit Grundflächenmassen von 150 mm x 505 mm (235 mm x 705 mm, 335 mm x 505 mm, 505 mm x 705 mm) angepasst ist.

In allen Fällen passt für jeden Lagermagazin-Typ jeweils eine ganze Zahl von Verpackungsmodulen 50 ohne "Platzverschwendung" in die Lagerschächte 61.

Fig. 14 zeigt schematisch die Verbindung von einem oder mehreren Verpackungsmodulen 50 zu einer Versandverpackung 55. Die Verpackungsmodule können dabei durch Verkleben, Umwickeln mit Folie, oder auf andere Art und Weise miteinander verbunden werden. Etiketten 57 können dabei zur Verklebung beitragen. Vorzugsweise können in zwischen miteinander verbundenen Verpackungsmodulen 50 gebildeten Zwischenräumen Begleitpapiere wie Lieferscheine, Werbematerial etc. untergebracht werden.

Fig. 15a) zeigt schematisch eine Vielzahl von Versandverpackungen 55, die zu einem Ladestapel 58 geschichtet sind, der auf einem Ladungsträger wie etwa einer Palette aufliegt. In Fig. 15b) ist zusätzlich noch eine Abdeckung 59 des Ladestapels 58 gezeigt. Durch die modularen Rastermaße der Verpackungsmodule 50 können erfindungsgemäß vorteilhaft stabile und raumeffiziente Ladestapel 58 gebildet werden.

Die Erfindung schlägt somit ein Verfahren und eine Einrichtung zur Lagerung von Artikeln, insbesondere von Kleinteilen vor, die einerseits eine möglichst weitgehend automatisierte Handhabung der in standardisierten Verpackungsmodulen gelagerten Artikel von der Einlagerung über die Kommissionierung bis zum Versand ermöglichen, dabei aber gleichzeitig eine hohe Lagerdichte erreichen.

## Patentansprüche

1. Verfahren zum Lagern von Artikeln, insbesondere von Kleinteilen, aufweisend die Verfahrensschritte:

   - für jeden zu lagernden Artikel, Auswahl eines Verpackungsmoduls (50) eines bestimmten Verpackungsmodul-Typs aus einer Anzahl verschiedener vordefinierter Verpackungsmodul-Typen mit jeweils unterschiedlichen Grundflächenmaßen einer bestimmten Rasterung,
   - artikelspezifische Anpassung der Packungshöhe des jeweils ausgewählten Verpackungsmoduls (50) an die Größe des Artikels,
   - Lagerung der in den jeweiligen Verpackungsmodulen (50) verpackten Artikel in einem Lager (20).

2. Verfahren nach Anspruch 1, wobei die Verpackungsmodule in Lagermagazinen (60) gelagert werden und wobei verschiedene Lagermagazin-Typen entsprechend den verschiedenen Verpackungsmodul-Typen vorgesehen sind.

3. Verfahren nach Anspruch 2, wobei die Lagermagazine (60) mit der im Lager (20) vorgesehenen Fördertechnik (23, 25) gefördert werden.

4. Verfahren nach Anspruch 1, 2 oder 3, wobei die Verpackungsmodule (50) als Kartonverpackungen ausgebildet sind und die jeweilige Höhe der Verpackungsmodule (50) durch entsprechende Fixierung eines aufgeschobenen Kartondeckels (52) angepasst wird.

5. Verfahren nach einem der Ansprüche 1 - 4, wobei die Innenhöhe eines Verpackungsmoduls (50) gleich der maximalen Höhe des darin verpackten Artikels ist.

6. Verfahren nach einem der Ansprüche 1 - 5, wobei die Verpackungsmodule (50) im Lager (20) ausschließlich liegend bewegt werden.

7. Verfahren nach einem der Ansprüche 1 - 6, wobei sich in jedem Verpackungsmodul (50) jeweils nur ein einziger Artikel befindet.

8. Verfahren nach einem der vorangehenden Ansprüche, wobei die Grundflächenmaße der Lagermagazine (60) aller Lagermagazin-Typen gleich sind.

9. Verfahren nach Anspruch 8, wobei jeder Lagermagazin-Typ einen oder mehrere Lagerschächte (61) mit einer Grundfläche zur passgenauen Aufnahme eines Verpackungsmoduls (50) des entsprechenden Verpackungsmodul-Typs aufweist, und wobei die Grundflächenmaße der verschiedenen Verpackungsmodul-Typen so gewählt sind, dass für jeden Lagermagazin-Typ jeweils eine ganze Zahl von Lagerschächten (61) passgenau auf die Grundfläche des Lagermagazins (50) passt.

10. Verfahren nach einem der vorangehenden Ansprüche, wobei zu lagernde Artikel bereits beim Hersteller oder Lieferanten in Verpackungsmodule (50) einer der vordefinierten Verpackungsmodul-Typen verpackt wird.

11. Verfahren nach einem der vorangehenden Ansprüche, wobei die Verpackungsmodule (50) auch als Versandverpackung verwendet werden.

12. Lagervorrichtung zur Lagerung von Artikeln, insbesondere von Kleinteilen, wobei die Artikel in Verpackungsmodulen (50) verpackt gelagert werden, wobei verschiedene vordefinierte Verpackungsmodul-Typen mit unterschiedlichen Grundflächenmaßen einer bestimmten Rasterung vorgesehen sind,
wobei die Höhe der Verpackungsmodule (50) unabhängig vom Verpackungsmodul-Typ entsprechend den Maßen des darin gelagerten Artikels wählbar ist,
aufweisend eine Vielzahl von Lagermagazinen (60) zur Aufnahme der Verpackungsmodule (50), wobei verschiedene Lagermagazin-Typen entsprechend den verschiedenen Verpackungsmodul-Typen vorgesehen sind.

13. Lagervorrichtung nach Anspruch 12, wobei die Verpackungsmodule (50) als Kartonverpackungen ausgebildet sind und die jeweilige Höhe der Verpackungsmodule durch entsprechende Fixierung eines aufgeschobenen Kartondeckels (52) realisiert wird.

14. Lagervorrichtung nach Anspruch 12 oder 13, wobei die Innenhöhe eines Verpackungsmoduls (50) gleich der maximalen Höhe des darin verpackten Artikels ist.

15. Lagervorrichtung nach einem der Ansprüche 12 - 14, wobei die Lagermagazine (60) mit der im Lager (20) vorgesehenen Fördertechnik (23, 25) verfahrbar sind.

16. Lagervorrichtung nach einem der Ansprüche 12 - 15, wobei die Grundflächenmaße der Lagermagazine (60) aller Lagermagazin-Typen gleich sind.

17. Lagervorrichtung nach Anspruch 16, wobei jeder Lagermagazin-Typ einen oder mehrere Lagerschächte (61) mit einer Grundfläche zur passgenauen Aufnahme eines Verpackungsmoduls (50) des entsprechenden Verpackungsmodul-Typs aufweist, und wobei Grundflächenmaße der verschiedenen Verpackungsmodul-Typen so gewählt ist, dass für jeden Lagermagazin-Typ jeweils eine ganze Zahl von Lagerschächten (61) passgenau auf die Grundfläche des Lagermagazins (50) passt.

18. Lagervorrichtung nach einem der Ansprüche 12 - 17, ausgebildet zur Lagerung von bereits in Verpackungsmodulen (50) einer der vordefinierten Verpackungsmodul-Typen verpackt angelieferten Artikeln.

19. Lagervorrichtung nach einem der Ansprüche 12 - 18, wobei die Verpackungsmodule (50) zur Verwendung auch als Auslieferungsverpackung (55) ausgebildet sind.

Fig. 1a

EP 3 318 511 A1

Fig. 1b

Fig. 2

```
         ┌─────────────────────────────────┐
         │          Anlieferung            │─ S1
         └─────────────────────────────────┘
                          │
                          ▼
              ╱─────────────────────╲
             ╱      Artikel im        ╲      S11
            ╱  Verpackungsmodul        ╲
            ╲      angeliefert?        ╱──── Ja ──────┐
             ╲                        ╱               │
              ╲──────────────────────╱                │
                          │ Nein                      │
                          ▼                           │
         ┌─────────────────────────────────┐          │
         │        Auswahl eines            │─ S12      │
         │    Verpackungsmodul - Typs      │          │
         └─────────────────────────────────┘          │
                          │                           │
                          ▼                           │
         ┌─────────────────────────────────┐          │
         │      Verpacken des Artikels      │─ S13     │
         │       im Verpackungsmodul        │          │
         └─────────────────────────────────┘          │
                          │                           │
                          ▼                           │
         ┌─────────────────────────────────┐          │
         │       Verschließen des          │─ S14      │
         │     Verpackungsmoduls und       │          │
         │   Anpassung der Packungshöhe    │          │
         └─────────────────────────────────┘          │
                          │                           │
                          ▼                           │
         ┌─────────────────────────────────┐          │
         │       Einlagerung im            │◄─────────┘
         │      Kommissionierlager         │─ S15
         └─────────────────────────────────┘
                          │
                          ▼
         ┌─────────────────────────────────┐
         │                                 │─ S3
         └─────────────────────────────────┘
```

Fig. 3

110

80

52

50

50

51

100

150

Verpackungsmodul: Typ 1
Breite 100 mm
Länge 150 mm
Höhe von 50 - 110 mm

Fig. 4a

140

110

50

52

80

51

50

150

235

Verpackungsmodul: Typ 2
Breite 150 mm
Länge 235 mm
Höhe von 50 - 140 mm

Fig. 4b

Verpackungsmodul: Typ 3
Breite 150 mm
Länge 505 mm
Höhe von 50 - 140 mm

Fig. 5a

Verpackungsmodul: Typ 4
Breite 235 mm
Länge 705 mm
Höhe von 70 - 170 mm

Fig. 5b

Verpackungsmodul: Typ 5
Breite 335 mm
Länge 505 mm
Höhe von 70 - 270 mm

Fig. 6a

Verpackungsmodul: Typ 6
Breite 505 mm
Länge 705 mm
Höhe von 90 - 370 mm

Fig. 6b

Lagermagazin-Typ 1

Fig. 7a

Fig. 7c

Fig. 7b

Fig. 7d

Lagermagazin-Typ 2

Fig. 8a

Fig. 8b

Fig. 8c

Fig. 8d

EP 3 318 511 A1

Lagermagazin-Typ 3

Fig. 9a

545

61

745

**Fig. 9b**

545

61

745

**Fig. 9c**

61    64

**Fig. 9d**

60

Lagermagazin-Typ 4

60

A

B

C

Fig. 10a

EP 3 318 511 A1

61

545

64

745

Fig. 10b

61

545

745

Fig. 10c

Fig. 10d

60

Lagermagazin-Typ 5

Fig. 11a

Fig. 11b

Fig. 11c

Fig. 11d

Lagermagazin-Typ 6

60

Fig. 12a

Fig. 12c

Fig. 12b

Fig. 12d

Fig. 13

Fig. 14

Fig. 15a

Fig. 15b

**Europäisches Patentamt**
**European Patent Office**
**Office européen des brevets**

# EUROPÄISCHER RECHERCHENBERICHT

Nummer der Anmeldung

EP 16 19 7455

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | US 9 315 344 B1 (LEHMANN SEBASTIAN [US])<br>19. April 2016 (2016-04-19)<br>* Zusammenfassung *<br>* Spalte 5 - Spalte 8 *<br>* Abbildungen 1-4 *<br>----- | 1,2,4-8,<br>10-19<br>3,9 | INV.<br>B65G1/137<br>B65B5/04<br>G06Q10/08 |
| X | JP 2006 168854 A (JFE ENG KK)<br>29. Juni 2006 (2006-06-29)<br>* Zusammenfassung *<br>* Abbildungen 1-4 *<br>----- | 12 | |
| Y | US 2010/059951 A1 (HADAR NIR [IL] ET AL)<br>11. März 2010 (2010-03-11)<br>* Zusammenfassung *<br>* Seite 1 - Seite 3 *<br>* Abbildungen 1-2,6,7 *<br>----- | 3,9 | |
| X | US 8 340 812 B1 (TIAN HONG [US] ET AL)<br>25. Dezember 2012 (2012-12-25)<br>* Zusammenfassung *<br>* Spalte 1 - Spalte 4 *<br>* Abbildung 1 *<br>----- | 1,2,12 | |

RECHERCHIERTE SACHGEBIETE (IPC)

B65G
B65D
B65B
G06Q

Der vorliegende Recherchenbericht wurde für alle Patentansprüche erstellt

| Recherchenort | Abschlußdatum der Recherche | Prüfer |
|---|---|---|
| Den Haag | 25. April 2017 | Palais, Brieux |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 19 7455

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-04-2017

| Im Recherchenbericht angeführtes Patentdokument | | Datum der Veröffentlichung | Mitglied(er) der Patentfamilie | | Datum der Veröffentlichung |
|---|---|---|---|---|---|
| US 9315344 | B1 | 19-04-2016 | KEINE | | |
| JP 2006168854 | A | 29-06-2006 | KEINE | | |
| US 2010059951 | A1 | 11-03-2010 | US | 2010059951 A1 | 11-03-2010 |
| | | | WO | 2010029510 A2 | 18-03-2010 |
| US 8340812 | B1 | 25-12-2012 | US | 8340812 B1 | 25-12-2012 |
| | | | US | 8712579 B1 | 29-04-2014 |
| | | | US | 2014230374 A1 | 21-08-2014 |
| | | | US | 2016125352 A1 | 05-05-2016 |

EPO FORM P0461

Für nähere Einzelheiten zu diesem Anhang : siehe Amtsblatt des Europäischen Patentamts, Nr.12/82